(19) Europäisches Patentamt
European Patent Office
Office européen des brevets

(11) Veröffentlichungsnummer: **0 495 190 B1**

(12) **EUROPÄISCHE PATENTSCHRIFT**

(45) Veröffentlichungstag der Patentschrift: **02.08.95**

(51) Int. Cl.$^{6}$: **G01B 11/26**, G01B 11/275

(21) Anmeldenummer: **91120607.6**

(22) Anmeldetag: **29.11.91**

# (54) Vorrichtung zur optischen Messung eines Winkels, insbesondere von Radstellungen an Fahrzeugen in einer vertikalen Ebene.

(30) Priorität: **16.01.91 DE 4101047**

(43) Veröffentlichungstag der Anmeldung:
**22.07.92 Patentblatt 92/30**

(45) Bekanntmachung des Hinweises auf die Patenterteilung:
**02.08.95 Patentblatt 95/31**

(84) Benannte Vertragsstaaten:
**DK ES FR GB IT**

(56) Entgegenhaltungen:
**EP-A- 0 386 401**
**EP-A- 0 491 208**
**DE-A- 2 830 257**
**DE-A- 2 915 515**
**DE-A- 3 632 806**

**PATENT ABSTRACTS OF JAPAN, Bd. 9, Nr. 327 (P-415)(2050) 21. Dezember 1985;& JP-A-60152928**

(73) Patentinhaber: **HOFMANN WERKSTATT-TECHNIK GMBH**
**Werner-von-Siemens-Strasse 2**
**D-64319 Pfungstadt (DE)**

(72) Erfinder: **Longa, Simone**
**Via Michelangelo 10**
**I-21051 Arcisate (Varese) (IT)**
Erfinder: **Castelnuovo, Marco**
**Via Valsese 50**
**I-20152 Milano (IT)**

(74) Vertreter: **Nöth, Heinz, Dipl.-Phys.**
**Patentanwalt,**
**Mozartstrasse 17**
**D-80336 München (DE)**

EP 0 495 190 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur optischen Messung eines Winkels, den Stellungen von Bauteilen, insbesondere Radstellungen an Fahrzeugen in einer vertikalen Ebene zu einan der bilden, mit Hilfe von Lichtstrahlen.

Beispielsweise bei der Messung von Sturzwinkeln an Kraftfahrzeugrädern ist es erforderlich, den Winkel der Radmittelebene gegenüber der Vertikalen zu bestimmen.

Aus der älteren, nachveröffentlichten EP-A-0 491 208 ist eine Vorrichtung zur optischen Messung eines Winkels, den Stellungen von Bauteilen, insbesondere Radstellungen an Fahrzeugen, zueinander bilden, mit Hilfe von Lichtstrahlen bekannt. Die Vorrichtung enthält eine erste Lichtquelle zum Aussenden eines ersten Lichtstrahls, der entlang eines ersten Schenkels des zu messenden Winkels auf den Scheitelpunkt des Winkels gerichtet ist; eine zweite Lichtquelle, deren Lichtstrahl bzw. Lichtstrahlen entlang eines zweiten Schenkels des zu messenden Winkels auf den Scheitelpunkt des Winkels gerichtet ist bzw. sind; im Scheitelpunkt des Winkels eine Blendeneinrichtung, die eine sich drehenden reflektierenden Fläche oder einen Drehspiegel enthalten kann, wobei die Blendeneinrichtung zumindest in der Ebene des zu messenden Winkels mit einem schmalen Durchlaßbereich für das entlang den beiden Schenkeln des Winkels ausgesendete Licht einen Vollwinkel (360°) überstreicht; im Strahlengang des durch den Durchlaßbereich der Blendeneinrichtung hindurchgetretenen Lichts einen Lichtempfänger; eine an den Lichtempfänger angeschlossene Signalregistriereinrichtung, welche jeweilige vom Lichtempfänger abgegebene Ausgangssignale registriert; und eine an die Signalregistriereinrichtung angeschlossene Rechnereinrichtung, welche aus dem Registrierabstand der in der Signalregistriereinrichtung registrierten Signale den Winkelabstand zwischen den beiden Schenkeln berechnet.

Aus der DE-A-36 32 806 ist eine Vorrichtung zur optischen Messung eines Winkels, den Stellungen von Bauteilen, insbesondere Radstellungen an Fahrzeugen in einer vertikalen Ebene, zueinander bilden, mit Hilfe von Lichtstrahlen bekannt. Die Vorrichtung enthält eine erste Lichtquelle zum Aussenden eines ersten Lichtstrahls, der entlang eines ersten Schenkels des zu messenden Winkels auf den Scheitelpunkt des Winkels gerichtet ist; an einem Pendel, das unter Schwerkraftwirkung entsprechend dem zu messenden Winkel auslenkbar ist, eine zweite Lichtquelle, deren Lichtstrahl bzw. Lichtstrahlen entlang eines zweiten Schenkels des zu messenden Winkels auf den Scheitelpunkt des Winkels gerichtet ist bzw. sind; im Scheitelpunkt des Winkels eine Blendeneinrichtung, welche zumindest in der Ebene des zu messenden Winkels mit einem schmalen Durchlaßbereich für das entlang den beiden Schenkeln des Winkels ausgesendete Licht einen Vollwinkel (360°) überstreicht; im Strahlengang des durch den Durchlaßbereich der Blendeneinrichtung hindurchgetretenen Lichts einen Lichtempfänger; eine an den Lichtempfänger angeschlossene Signalregistriereinrichtung, welche jeweilige vom Lichtempfänger abgegebene Ausgangssignale registriert; und eine an die Signalregistriereinrichtung angeschlossene Rechnereinrichtung, welche aus dem Registrierabstand der in der Signalregistriereinrichtung registrierten Signale den Winkelabstand zwischen den beiden Schenkeln berechnet.

Bei dieser Vorrichtung liegen die Pendelachse und der Scheitelpunkt des Winkels, auf den die beiden Lichtstrahlen gerichtet sind, an unterschiedlichen Stellen. Die Übertragung der gewonnenen Meßwerte auf den für das Kraftfahrzeugrad zu bestimmenden Winkel ist relativ kompliziert und beinhaltet das Risiko von Ungenauigkeiten.

Aufgabe der Erfindung ist es, eine Vorrichtung der eingangs genannten Art zu schaffen, bei der die Winkelstellung eines Bauteils, insbesondere eines Rades an einem Fahrzeug, bezüglich einer vertikalen Ebene in einfacher Weise und mit hoher Genauigkeit gemessen werden kann.

Diese Aufgabe wird erfindungsgemäß durch eine Vorrichtung mit den Merkmalen des Patentanspruchs 1 gelöst.

Vorteilhafte Ausgestaltungen der Erfindung sind in den abhängigen Ansprüchen angegeben.

Dadurch, daß entlang dem ersten Schenkel des zu messenden Winkels ein erster an die Stellung eines Bauteils, z.B. Kraftfahrzeugrades, gekoppelter Lichtstrahl, der auch als Referenzlichtstrahl bezeichnet werden kann, ausgesendet wird und der zweite Schenkel des zu messenden Winkels mit dem Gravitationsvektor durch das Pendel in Übereinstimmung gebracht wird, ist es möglich, ohne äußere Bezugshilfsmittel die Lage- bzw. Winkelbestimmung durchzuführen. Bei der Erfindung wird ferner davon Gebrauch gemacht, daß die Lichtstrahlen entlang den beiden Schenkeln des zu messenden Winkels in zeitlichen Abständen voneinander registriert bzw. erfaßt werden und aus diesen zeitlichen Abständen bzw. dem zeitlichen Abastand der Winkel bestimmt wird. Unter Zuhilfenahme von elektronischen Speichereinrichtungen und Rechnermitteln können die registrierten Signale in Abhängigkeit vom zeitlichen Abstand rechnergestützt zur Bestimmung der Winkelgröße ausgewertet werden.

In bevorzugter Weise läßt sich die erfindungsgemäße Winkelmessung zum Einsatz bringen bei einer Radstellungsmeßvorrichtung, insbesondere beim Messen des Sturzwinkels eines Kraftfahrzeugrades. Hierzu wird in bevorzugter Weise in der Verlängerung der jeweiligen Radachse die erste Lichtquelle angeordnet. Diese sendet längs der Verlängerung der Radachse, die den ersten Schenkel des zu messenden Winkels bildet, einen Lichtstrahl aus. Dieser Lichtstrahl bildet den schon erwähnten Referenzlichtstrahl. Die erste Lichtquelle kann daher auch als Referenzlichtquelle bezeichnet werden. Der Referenzlichtstrahl wird auf die Blendeneinrichtung gerichtet, die ebenfalls in der Verlängerung der Radachse liegt. Im Scheitel des zu messenden Winkels führt diese Blendeneinrichtung ihre Blendenfunktion aus. Das Pendel, welches die zweite Lichtquelle aufweist, wird in Abhängigkeit vom Sturzwinkel, der sich auf die Neigung der Radachse auswirkt, um eine Pendelachse, die senkrecht zur Radachse bzw. zum Referenzlichtstrahl läuft, ausgelenkt. Hierdurch wird in Abhängigkeit vom Sturzwinkel der Empfang der zweiten Lichtquelle zeitlich verschoben. Diese zeitliche Verschiebung wird in einer Auswerteeinrichtung als Maß bei der Bestimmung des Sturzwinkels ausgewertet.

Als von der Schwerkraft ausgelenkte Lichtquelle kommt ein einzelner Lichtemitter in Frage, der entgegengesetzt zur Richtung des Gravitationsvektors seinen Lichtstrahl auf die bevorzugt mit konstanter Geschwindigkeit umlaufende Blendeneinrichtung richtet. Es können hierfür jedoch auch zwei Lichtemitter vorgesehen sein, die in gleichem Winkelabstand von einem in der Richtung des Gravitationsvektors liegenden Pendelarm angeordnet sind. Bei der zweiten Lichtquelle kann es sich auch um eine reflektierende Fläche am Pendel oder zwei reflektierende Flächen am Pendel handeln.

Als Lichtemitter für die erste und zweite Lichtquelle kommen bevorzugt Infrarotemitterdioden zum Einsatz. Es können jedoch auch Laserstrahlquellen verwendet werden.

Die erfindungsgemäße Meßvorrichtung ist äußerst einfach in ihrem Aufbau und läßt sich bei der Winkelbestimmung einfach handhaben.

Anhand der Figuren wird an Ausführungsbeispielen die Erfindung noch näher erläutert. Es zeigt:

- Fig. 1 ein erstes Ausführungsbeispiel der Erfindung.
- Fig. 2 ein zweites Ausführungsbeispiel der Erfindung.
- Fig. 3 ein drittes Ausführungsbeispiel der Erfindung.
- Fig. 4 ein viertes Ausführungsbeispiel der Erfindung.
- Fig. 5 ein Blockschaltbild einer Auswerteeinrichtung, mit der aus dem zeitlichen Abstand empfangener Lichtsignale eine Winkelbestimmung durchgeführt wird;
- Fig. 6 Lichtimpulse, welche mit der in Fig. 5 dargestellten Einrichtung empfangen und ausgewertet werden; und
- Fig. 7 Anwendungsbeispiel für eine jeweilige in den Fig. 1 bis 4 dargestellten Vorrichtung.

In den Figuren 1 bis 4 sind Ausführungsbeispiele für eine Vorrichtung zur optischen Messung eines Winkels a dargestellt. Der Winkel a liegt in einer vertikalen Ebene. Die vier Ausführungsbeispiele enthalten jeweils eine erste Lichtstrahlquelle, welche entlang des ersten Schenkels S1 des zu messenden Winkels a einen Lichtstrahl aussendet. Dieser Lichtstrahl bildet einen Referenzlichtstrahl. Im Scheitelpunkt S0 des Winkels a befindet sich eine Blendeneinrichtung, die bei den dargestellten Ausführungsbeispielen einen Drehspiegel 4 (Fig. 1, 3, 4) und 4' (Fig. 2) aufweist. Der Drehspiegel 4 bzw. 4' wird mit Hilfe eines Motors 5 der ein Gleichstrommotor oder Schrittmotor oder dergl. sein kann, mit konstanter Drehzahl bzw. Winkelgeschwindigkeit angetrieben. Der Scheitelpunkt S0 befindet sich auf einer reflektierenden Fläche 22 des Drehspiegels 4 bzw. 22' des Drehspiegels 4'.

Der Drehspiegel 4, 4' bzw. seine reflektierende Fläche 22, 22' wird um eine Drehachse D, D' von dem Motor 5 mit konstanter Drehzahl bzw. Winkelgeschwindigkeit gedreht. Die reflektierende Fläche 22 ist gegenüber der Drehachse D geneigt angeordnet und hat in bevorzugter Weise gegenüber dieser Drehachse D einen Winkel von 45° (Fig. 1, 3, 4). Der Scheitelpunkt S0 des Winkels a liegt bei den Ausführungsbeispielen der Fig. 1, 3 und 4 in der Drehachse D der reflektierenden Fläche 22.

Der entlang dem Schenkel S1 ausgerichtete Referenzstrahl der Lichtquelle 3 ist im rechten Winkel zur Drehachse D ausgerichtet und trifft im Scheitelpunkt S0 auf die reflektierende Fläche 22. Die Drehachse D erstreckt sich im rechten Winkel zu der Ebene, in welcher der zu messende Winkel a liegt.

Auch bei dem in der Fig. 2 dargestellten Ausführungsbeispiel verläuft die Drehachse D' des Drehspiegels 4' im rechten Winkel zum ersten Schenkel S1 bzw. zum Referenzlichtstrahl der Lichtquelle 3. Bei diesem Ausführungsbeispiel erstreckt sich die reflektierende Fläche 22' des Drehspiegels 4' jedoch im Unterschied zu den Ausführungsbeispielen der Figuren 1, 3 und 4 senkrecht zu der Ebene (Vertikalebene), in welcher der zu messende Winkel a liegt. Ferner liegt die Drehachse D' des Drehspiegels 4' in der reflektierenden Fläche 22' bzw. erstreckt sich in dieser reflektierenden Fläche 22'. Der Drehspiegel 4' wird von einem Motor 5' ebenfalls mit konstanter Winkelgeschwindigkeit angetrieben.

Die in den Fig. 1 bis 4 dargestellten Ausführungsbeispiele besitzen jeweils ein Pendel 11, an welchem eine zweite Lichtquelle angeordnet ist. Das Pendel 11 wird unter Schwerkraftwirkung in Richtung eines Gravitationsvektors G ausgelenkt. Ein zweiter Schenkel S2 des zu messenden Winkels a erstreckt sich parallel zur Richtung des Gravitationsvektors G und damit parallel zu einem Pendelarm 9. Das Pendel 11 ist mit seinem Pendelarm 9 (in den Fig. 1 bis 4 sind zwei Pendelarme 9 vorgesehen) an einer Pendelachse PA schwenkbar gelagert. Die Pendelachse PA erstreckt sich senkrecht zum Referenzschenkel bzw. ersten Schenkel S1 des zu messenden Winkels a. Die Pendelachse PA fällt, wie die Figuren zeigen, mit der Drechachse D bzw. D' des Drehspiegels 4 bzw. 4' zusammen.

Beim Ausführungsbeispiel der Fig. 1 wird die zweite Lichtquelle 8 dargestellt durch eine reflektierende Fläche, insbesondere Spiegel 10, auf welche die von zwei zur zweiten Lichtquelle 8 gehörigen Lichtemittern A und B ausgesendete Strahlen gerichtet sind. Die beiden Lichtemitter A und B sind bevorzugt mit gleichem Abstand von der Pendelachse PA entfernt. Die von den beiden Lichtemittern A und B ausgesendeten Strahlen treffen auf den Spiegel 10 auf und werden von dort in Richtung auf den Scheitelpunkt S0 des zu messenden Winkels a reflektiert. Die reflektierten Strahlen befinden sich zu beiden Seiten des zweiten Schenkels S2 des zu messenden Winkels a.

Bei der in der Fig. 4 dargestellten Ausführungsform sind am Pendel 11 an einer Trägerplatte 23 zwei Lichtemitter 6,6 vorgesehen. Die beiden Lichtemitter stellen die zweite Lichtquelle dar. Die beiden Lichtemitter 6,6 senden Lichtstrahlen in Richtung auf den Scheitelpunkt S0, der sich auf der reflektierenden Fläche 22 befindet, wie schon erläutert wurde.

Bei dem in der Fig. 3 dargestellten Ausführungsbeispiel ist als zweite Lichtquelle ein einzelner Lichtemitter 7 vorgesehen. Dieser Lichtemitter 7 befindet sich am Pendel 11 und liegt in seiner jeweiligen Stellung senkrecht unterhalb des Scheitelpunktes S0 des zu messenden Winkels a.

Bei der in der Fig. 2 dargestellten Ausführungsform sind zwei reflektierende Flächen 10' am Pendel 11 als zweite Lichtquelle vorgesehen. Die Mittelpunkte dieser reflektierenden Flächen 10' bilden mit der Pendelachse PA ein gleichschenkliges Dreieck. Die reflektierenden Flächen 10' reflektieren einen von der reflektierenden Fläche 22' des Drehspiegels 4' reflektierten Strahl, der parallel zum ersten Schenkel S1 des zu messenden Winkels a von der Referenzlichtquelle 3 ausgesendet ist. Der jeweils von den beiden reflektierenden Flächen 10' reflektierte Strahl wird wiederum zum Drehspiegel 4' zurückreflektiert und von dessen reflektierender Fläche parallel zum ersten Schenkel S1 des zu messenden Winkels a in Richtung auf einen Lichtempfänger 1' reflektiert.

Bei den Ausführungsbeispielen der Fig. 1, 3 und 4 werden die auf den Drehspiegel 4 entlang dem zweiten Schenkel S2 des zu messenden Winkels a gerichteten Strahlen der zweiten Lichtquellen 8 bzw. 7 bzw. 6,6 in Richtung auf einen Lichtempfänger 1 von der reflektierenden Fläche 22 reflektiert. Dieser Lichtempfänger 1 liegt mit seiner Empfangsrichtung parallel oder koaxial zur Pendelachse PA bzw. Drehachse D des Drehspiegels 4.

Bei den Ausführungsbeispielen der Fig. 1, 3 und 4 dreht sich die reflektierende Fläche 22 des Drehspiegels 4 mit konstanter Drehzahl fortlaufend jeweils um einen Vollwinkel (360°). Hierbei nimmt die reflektierende Fläche 22 für die längs der Schenkel S1 und S2 ausgerichteten Lichtstrahlen jeweils einmal pro Vollwinkeldurchlauf eine Stellung ein, bei welcher der jeweilige Lichtstrahl in Richtung auf den Lichtempfänger 1 zu reflektiert wird. Der zeitliche Unterschied zwischen der Reflexion des Lichtstrahls entlang dem Schenkel S1 (Referenzschenkel) und der Reflexion der Lichtstrahlen entlang dem Schenkel S2 in Richtung auf den Lichtempfänger 1 hängt von der Größe des zu messenden Winkels a sowie von der bekannten Drehzahl bzw. Winkelgeschwindigkeit des Drehspiegels 4 ab. Es ist daher möglich, durch Erfassung dieser Zeitdifferenz die Größe des Winkels a zu bestimmen.

Bei dem in Fig. 2 dargestellten Ausführungsbeispiel wird der entlang dem Schenkel S1 von der ersten Lichtquelle 3 ausgesendete Lichtstrahl gegebenenfalls mit Hilfe eines Linsensystems 24 fokusiert und/oder moduliert. Der Lichtstrahl wird auf den Drehspiegel 4' gerichtet. Wenn die reflektierende Fläche 22' während der Umdrehung des Drehspiegels 4' senkrecht zum ersten Schenkel S1 liegt, wird der von der ersten Lichtquelle 3 ausgesendete Lichtstrahl entlang dem Schenkel S1 zurückreflektiert und trifft auf den Lichtempfänger 1'. Während der weiteren Drehung des Drehspiegels 4' kommt die reflektierende Fläche 22' in eine Stellung, in welcher sie den von der ersten Lichtquelle 3 ausgesendeten Lichtstrahl in Richtung auf die beiden reflektierenden Fläche 10' nacheinander reflektiert. Von dort werden die Strahlen zur reflektierenden Fläche 22' zurückreflektiert und durch die reflektierende Fläche 22' entlang dem ersten Schenkel S1 auf den Lichtempfänger 1' gerichtet. Diese Lichtstrahlen werden vom Lichtempfänger 1' zeitlich versetzt empfangen, wie das auch bei den Ausführungsbeispielen der Figuren 1, 3 und 4 der Fall ist.

In der Figur 6 ist das vom Lichtempfänger 1 bzw. 1' in Abhängigkeit von den empfangenen Lichtempulsen abgegebene Lichtsignal dargestellt. Für die Ausführungsbeispiele der Fig. 1, 3 und 4 werden die entlang der Winkelschenkel S1 und S2 auf den Scheitelpunkt S0 gerichteten Strahlen immer dann in Richtung auf den Lichtempfänger 1 reflektiert, wenn die Einfalls- und Ausfallswinkelebene des jeweiligen Strahls senkrecht auf der reflektierenden Fläche 22 stehen. Dann übt der Drehspiegel 4, welcher die Blendeneinrichtung darstellt, seine Durchlaßfunktion aus. Das Licht wird dann, wie noch zu erläutern ist, in Impulsform (Fig. 6) vom Lichtempfänger 1 empfangen.

Beim Ausführungsbeispiel der Fig. 2 werden vom Lichtempfänger 1' immer dann reflektierte Strahlen empfangen, wenn die Flächennormale der reflektierenden Fläche 22' die Winkelhalbierende des jeweiligen Winkels zwischen dem Referenzschenkel S1 bzw. dem parallel zu diesem Schenkel ausgesendeten Lichtstrahl und den von den Reflektoren 10' reflektierten Strahlen ist. Es werden dann ebenfalls jeweils Lichtimpulse (Fig. 6) vom Lichtempfänger 1' empfangen.

In der Fig. 6 bedeuten Impulse IR vom Empfänger 1 bzw. 1' erzeugte Ausgangsimpulse, die empfangenen Lichtimpulsen entsprechen, welche den längs der ersten Winkelschenkel S1 ausgesendeten Lichtstrahlen der Referenzlichtquelle 3 zugeordnet sind. Die Impulse IR (Referenzimpulse) werden in bestimmten zeitlichen Abständen tR vom Lichtempfänger 1 bzw. 1' erzeugt. Dies erfolgt immer dann, wenn der längs dem ersten Winkelschenkel S1 verlaufende Lichtstrahl vom Drehspiegel 4 bzw. 4' auf den Lichtempfänger 1 bzw. 1' reflektiert wird. In bestimmten zeitlichen Abständen t1 und t2 werden bei den Ausführungsbeispielen der Fig. 1, 2 und 4 die Impulse I21 und I22 erzeugt. Diese Impulse entsprechen den Lichtstrahlen der zweiten Lichtquellen 8, 10',10' und 6,6. Der zeitliche Unterschied tR zwischen den beiden Referenzimpulsen IR entspricht einem Vollwinkel (360°). Die zeitlichen Abstände t1, t2 der beiden Ausgangsimpulse I21, I22 vom Referenzimpuls IR sind Größen, aus denen der Winkel a nach folgender Beziehung bestimmt werden kann:

$$a = \frac{(t1 + t2)/2 \times 360^\circ}{tR}$$

Für das in der Fig. 3 dargestellte Ausführungsbeispiel, bei der von der zweiten Lichtstrahlquelle 7 nur ein Lichtstrahl längs des Winkelschenkels S2 in Richtung auf den Scheitelpunkt S0 ausgesendet wird, liefert der Lichtempfänger 1 nur einen Ausgangsimpuls, der dem Lichtstrahl längs dem Schenkel S2 zugeordnet ist zu einem Zeitpunkt t1. Der Winkel a ergibt sich für dieses Ausführungsbeispiel nach folgender Beziehung:

$$a = \frac{t1 \times 360^\circ}{tR}$$

In der Fig. 5 ist eine Auswerteschaltung dargestellt, mit welcher die elektrischen Ausgangsimpulse des Lichtempfängers 1 bzw. 1' für die Winkelbestimmung ausgewertet werden. Zur Erzeugung modulierter Lichtstrahlen können die Lichtquellen 3, 6, 7 und 8 (Emitter A und B) in geeigneter Weise mit Hilfe eines Modulators 15 moduliert sein. Ferner können geeignete Polarisatoren, wie beispielsweise der in Fig. 2 gezeigte Polarisator 24, im Strahlengang der Lichtquellen vorgesehen sein. Es ist jedoch auch möglich, hier geeignete Filter und dergl. und andere Linsensysteme vorzusehen. Auf diese Weise wird vermieden, daß aus der Umgebung störende Strahlung vom Lichtempfänger 1 bzw. 1' weitergeleitet wird. Es ist daher an den Ausgang des Lichtempfängers 1 bzw. 1' ein entsprechender Demodulator 12, beispielsweise ein Filter, angeschlossen, wie es in Fig. 5 dargestellt ist.

An den Ausgang des Demodulators 12 ist eine Verriegelungsschaltung 14 angeschlossen, die zum Zeitpunkt eines jeweiligen in der Fig. 6 dargestellten Impulses einen Zählwert, der von einem Zähler 13 geliefert wird, festhält und zur Speicherung über einen Prozessor 17 einem Speicher 18 weiterleitet. Die im Speicher 18 abgelegten Daten, welche den Zeitdifferenzen tr, t1 und t2 entsprechen, werden gemäß den oben angegebenen Gleichungen für die jeweiligen Ausführungsbeispiele zur Berechnung des Winkels a in einem Prozessor 17 ausgewertet. Dieser Vorgang wiederholt sich mit jeder Drehung des Drehspiegels 4 bzw. 4'. Die Drehung des Drehspiegels 4 bzw. 4' wird von einer den Motor 5 bzw. 5' betreibenden Motorsteuerung 16, welche mit dem Prozessor 17 verbunden ist, gesteuert. Hierdurch wird eine konstante Drehzahl des Drehspiegels erreicht. Die Arbeitsweise des Prozessors 17 wird von einer Steuereinheit 21 gesteuert.

Mit dem Prozessor 17 ist ferner ein Bezugsspeicher 19 verbunden. Dieser kann den Zeitstandard liefern für die Umsetzung des zeitlichen Abstandes tr in Winkelmaße, wobei der zeitliche Abstand tr dem Vollwinkel 360° entspricht. Der Bezugsspeicher kann jedoch auch die Funktion haben, daß beispielsweise Mittelwerte vorher errechneter Winkelwerte gespeichert werden und durch fortlaufende Mittelwertbildung eine möglichst genaue Winkelberechnung bei mehreren aufeinander folgenden Zyklen erreicht wird. Die ermittelten Winkelwerte werden vom Prozessor 17 einer Datenausgabeeinrichtung 20 zugeleitet, aus welcher die berechneten Winkelgrößen entnommen werden können.

In der Fig. 7 ist ein Anwendungsbeispiel der Erfindung dargestellt. Unter Zuhilfenahme der Erfindung wird der Sturzwinkel b eines Kraftfahrzeugrades 25 ermittelt. Der Sturzwinkel b ist definiert durch die Neigung der Radmittelebene M gegenüber einer vertikalen Ebene V auf der Aufstandsfläche AF des Kraftfahrzeugrades 25. Zur Messung des Sturzwinkels b wird eine Baueinheit 2, welche die erste und zweite Lichtquelle, die Blendeneinrichtung und den Lichtempfänger gemäß einem der Ausführungsbeispiele der Fig. 1 bis 4 enthalten kann, mit Hilfe bekannter Befestigungs- und Zentriermittel 26 am Kraftfahrzeugrad 25 befestigt. Die Befestigung erfolgt so, daß die erste Lichtquelle 3 in der Radachse RA des Kraftfahrzeugrades 25 liegt. Der von der ersten Lichtstrahlquelle 3 ausgesendete Lichtstrahl ist daher in der Radachse RA auf die Blendeneinrichtung 4 bzw. 4' gerichtet. Die Pendelachse PA verläuft senkrecht zur Radachse RA. Das Pendel 11 wird in Abhängiekeit von der Schräglage der Radachse RA aufgrund der Schwerkraftwirkung G ausgelenkt. Die Neigung der Radachse RA und damit die Auslenkung des Pendels 11 erfolgt in Abhängigkeit von dem zu messenden Sturzwinkel b. Der Sturzwinkel b läßt sich aus dem Winkel a, welcher gemäß obiger Beschreibung nach einem der Ausführungsbeispiele 1 bis 4 mit Hilfe der Auswerteschaltung in der Fig. 5 ermittelt werden kann, nach folgender Gleichung bestimmen. Diese Beziehung lautet:

$$b = a - 90°$$

Die entsprechende Auswertung läßt sich durch einen zusätzlichen Rechenvorgang, beispielsweise im Prozessor 17, mit Hilfe der in Fig. 5 dargestellten Schaltungsanordnung durchführen.

## Patentansprüche

1. Vorrichtung zur optischen Messung eines Winkels, den Stellungen von Bauteilen, insbesondere Radstellungen an Fahrzeugen in einer vertikalen Ebene, zueinander bilden, mit Hilfe von Lichtstrahlen, wobei
   - eine erste Lichtquelle (3) zum Aussenden eines ersten Lichtstrahls, der entlang eines ersten Schenkels (S1) des zu messenden Winkels (a) auf den Scheitelpunkt (S0) des Winkels (a) gerichtet ist, vorgesehen ist;
   - an einem Pendel (11), das unter Schwerkraftwirkung entsprechend dem zu messenden Winkel (a) auslenkbar ist, eine zweite Lichtquelle (6; 7; 10; 10') angeordnet ist, deren Lichtstrahl bzw. Lichtstrahlen entlang eines zweiten Schenkels (S2) des zu messenden Winkels (a) auf den Scheitelpunkt (S0) des Winkels (a) gerichtet ist bzw. sind;
   - im Scheitelpunkt (S0) des Winkels (a) eine Blendeneinrichtung (4, 5; 4', 5') vorgesehen ist, welche zumindest in der Ebene des zu messenden Winkels (a) mit einem schmalen Durchlaßbereich für das entlang den beiden Schenkeln (S1, S2) des Winkels (a) ausgesendete Licht einen Vollwinkel (360°) überstreicht, und eine sich drehende reflektierende Fläche (22; 22') aufweist, auf welcher der Scheitel (S0) des zu messenden Winkels liegt, und welche die jeweiligen von den Lichtquellen (3, 6; 7; 10; 10') einfallenden Lichtstrahlen in Richtung auf den Lichtempfänger (1; 1') in der Winkellage des Durchlaßbereichs der Blendeneinrichtung (4, 5; 4', 5') reflektiert;
   - im Strahlengang des durch den Durchlaßbereich der Blendeneinrichtung, (4, 5; 4', 5') hindurchgetretenen Lichts ein Lichtempfänger (1; 1') angeordnet ist;
   - an den Lichtempfänger (1; 1') eine Signalregistriereinrichtung (13, 14), welche Jeweilige vom Lichtempfänger (1; 1') abgegebene Ausgangssignale registriert, angeschlossen ist; und
   - an die Signalregistriereinrichtung (13, 14) eine Rechnereinrichtung (17, 18, 19), welche aus dem Registrierabstand der in der Signalregistriereinrichtung registrierten Signale den Winkelabstand zwischen den beiden Schenkeln (S1, S2) berechnet, angeschlossen ist.

2. Vorrichtung nach Anspruch 1, dadurch gekennzeichnet, daß der Durchlaßbereich der Blendeneinrichtung (4, 5; 4', 5,) mit konstanter Geschwindigkeit den Vollwinkel (360°) in der Ebene des zu messenden Winkels (a) durchläuft.

3. Vorrichtung nach Anspruch 1 oder 2, dadurch gekennzeichnet, daß der Registrierabstand ein zeitlicher Abstand ist.

4. Vorrichtung nach einem der Ansprüche 1 bis 3, dadurch gekennzeichnet, daß die Lichtquelle (6; 10') am Pendel (11) in einer zur Ebene des zu messenden Winkels (a) parallelen Ebene doppelt und mit der Pendelachse (PA) ein gleichschenkeliges Dreieck bildend angeordnet ist.

5. Vorrichtung nach einem der Ansprüche 1 bis 4, dadurch gekennzeichnet, daß die Lichtquelle (6; 7) aus Lichtemittern gebildet ist.

**6.** Vorrichtung nach einem der Ansprüche 1 bis 5, dadurch gekennzeichnet, daß die zweite Lichtquelle (10; 10') aus einem Reflektor bzw. Reflektoren für von der ersten Lichtquelle (3) oder anderen Lichtquellen (8) ausgesendete Lichtstrahlen besteht.

**7.** Vorrichtung nach einem der Ansprüche 1 bis 6, dadurch gekennzeichnet, daß die erste Lichtquelle (3) als Lichtemitter ausgebildet ist und einen Lichtstrahl aussendet, dessen Achse mit dem ersten Schenkel (S1) des zu messenden Winkels (a) zusammenfällt.

**8.** Vorrichtung nach Anspruch 4, dadurch gekennzeichnet, daß die doppelt angeordnete Lichtquelle (6; 10') zwei Lichtstrahlen aussendet, welche im Scheitel (S0) des zu messenden Winkels (a) sich treffen, wobei die beiden Lichtstrahlen beidseitig des zweiten Schenkels (S2) des zu messenden Winkels (a) liegen.

**9.** Vorrichtung nach einem der Ansprüche 1 bis 8, dadurch gekennzeichnet, daß die sich drehende reflektierende Fläche (22) gegenüber ihrer Drehachse (D) einen Winkel von 45° aufweist und die Drehachse (D) im rechten Winkel gegenüber der Ebene verläuft, in welcher der zu messende Winkel (a) liegt.

**10.** Vorrichtung nach einem der Ansprüche 1 bis 8, dadurch gekennzeichnet, daß die sich drehende reflektierende Fläche (22') im rechten Winkel zu der Ebene, in welcher der zu messende Winkel (a) liegt, sich erstreckt, und die Drehachse (D') in der reflektierenden Fläche (22') liegt.

**11.** Vorrichtung nach einem der Ansprüche 1 bis 10, dadurch gekennzeichnet, daß die reflektierende Fläche (22, 22') auf einem Drehspiegel (4, 4') liegt.

**12.** Vorrichtung nach Anspruch 11, dadurch gekennzeichnet, daß die Pendelachse (PA) und die Drehachse (D; D') des Drehspiegels (4; 4') koaxial sind.

**13.** Vorrichtung nach Anspruch 12, dadurch gekennzeichnet, daß die Pendelachse (PA) und die Drehachse (D; D') in einer horizontalen Ebene liegen.

**14.** Vorrichtung nach einem der Ansprüche 1 bis 9, dadurch gekennzeichnet, daß der Lichtempfänger (1) in der Drehachse (D) der sich drehenden reflektierenden Fläche (22) liegt.

**15.** Vorrichtung nach einem der Ansprüche 1 bis 8 und 10 bis 12 dadurch gekennzeichnet, daß der Lichtempfänger (1') in seiner Empfangsrichtung parallel zum ersten Schenkel (S1) des zu messenden Winkels (a) ausgerichtet ist.

**16.** Vorrichtung nach einem der Ansprüche 1 bis 15, dadurch gekennzeichnet, daß der Lichtempfänger (1; 1') an eine Auswerteeinrichtung (12-22) angeschlossen ist, welche aus den zeitlichen Abständen der empfangenen Lichtstrahlen den zu messenden Winkel (a) bestimmt.

**17.** Vorrichtung nach einem der Ansprüche 1 bis 16, dadurch gekennzeichnet, daß zur Messung von Radstellungen an Fahrzeugen, insbesondere Kraftfahrzeugen, zugeordnet zu jedem Fahrzeugrad, in der Verlängerung der jeweiligen Radachse (RA) die erste Lichtquelle (3), welche den ersten Lichtstrahl längs der Verlängerung der Radachse (RA), die den ersten Schenkel (S1) des in einer vertikalen Ebene zu messenden Winkels (a) bildet, aussendet, und ferner die Blendeneinrichtung (4, 5; 4', 5') liegen.

**18.** Vorrichtung nach einem der Ansprüche 1 bis 17, dadurch gekennzeichnet, daß die erste Lichtquelle (3), die zweite Lichtquelle (6; 7; 10; 10'), die Blendeneinrichtung (4, 5; 4', 5') und der Lichtempfänger (1; 1') eine an ein Bauteil, insbesondere Fahrzeugrad, montierbare Baueinheit (2) bildet.

**19.** Vorrichtung nach Anspruch 17 oder 18, dadurch gekennzeichnet, daß die Pendelachse (PA) und die Radachse (RA) senkrecht zueinander liegen.

**20.** Vorrichtung nach einem der Ansprüche 17 bis 19, dadurch gekennzeichnet, daß aus dem gemessenen Winkel (a) der Sturzwinkel (b) des Rades bestimmt wird.

## Claims

**1.** Apparatus for the optical measurement of an angle between positions of components, in particular wheel positions on vehicles in a vertical plane, by means of light beams, wherein

- there is provided a first light source (3) for emitting a first light beam which is directed along a first side (S1) of the angle (a) to be measured on to the apex point (S0) of the angle (a);
- arranged on a pendulum (11) which can deflect under the effect of the force of gravity in accordance with the angle (a) to be measured is a second light source (6; 7; 10; 10') whose light beam or beams is or are directed along a second side (S2) of the angle (a) to be measured on to the apex point (S0) of the angle (a);

- provided at the apex point (S0) of the angle (a) is an aperture device (4, 5; 4', 5') which at least in the plane of the angle (a) to be measured passes over a full angle (360°) with a narrow transmission region for the light which is emitted along the two sides (S1, S2) of the angle (a), and has a rotating reflecting surface (22; 22') on which the apex point (S0) of the angle to be measured lies and which reflects the respective light beams incident from the light sources (3, 6; 7; 10; 10') towards the light receiver (1; 1') in the angular position of the transmission region of the aperture device (4, 5; 4', 5');
- a light receiver (1; 1') is arranged in the beam path of the light passed through the transmission region of the aperture device (4, 5; 4', 5');
- connected to the light receiver (1; 1') is a signal registering device (13, 14) which registers respective output signals produced by the light receiver (1; 1'); and
- connected to the signal registering device (13, 14) is a calculating device (17, 18, 19) which calculates the angular spacing between the two sides (S1, S2) from the registration spacing of the signals registered in the signal registering means.

**2.** Apparatus according to claim 1 characterised in that the transmission region of the aperture device (4, 5; 4', 5') passes at a constant speed through the full angle (360°) in the plane of the angle (a) to be measured.

**3.** Apparatus according to claim 1 or claim 2 characterised in that the registration spacing is a spacing in respect of time.

**4.** Apparatus according to one of claims 1 to 3 characterised in that the light source (6; 10') at the pendulum (11) is arranged duplicated in a plane parallel to the plane of the angle (a) to be measured and forming an isosceles triangle with the pendulum axis (PA).

**5.** Apparatus according to one of claims 1 to 4 characterised in that the light source (6; 7) is formed from light emitters.

**6.** Apparatus according to one of claims 1 to 5 characterised in that the second light source (10; 10') comprises a reflector or reflectors for light beams emitted by the first light source (3) or other light sources (8).

**7.** Apparatus according to one of claims 1 to 6 characterised in that the first light source (3) is in the form of a light emitter and emits a light beam whose axis coincides with the first side (S1) of the angle (a) to be measured.

**8.** Apparatus according to claim 4 characterised in that the doubly disposed light source (6; 10') emits two light beams which meet at the apex (S0) of the angle (a) to be measured, wherein the two light beams lie on both sides of the second side (S2) of the angle (a) to be measured.

**9.** Apparatus according to one of claims 1 to 8 characterised in that the rotating reflecting surface (22) is at an angle of 45° relative to its axis of rotation (D) and the axis of rotation (D) extends at a right angle relative to the plane in which the angle (a) to be measured lies.

**10.** Apparatus according to one of claims 1 to 8 characterised in that the rotating reflecting surface (22') extends at a right angle to the plane in which the angle (a) to be measured lies and the exis of rotation (D') lies in the reflecting surface (22').

**11.** Apparatus according to one of claims 1 to 10 characterised in that the reflecting surface (22, 22') lies on a rotary mirror (4, 4').

**12.** Apparatus according to claim 11 characterised in that the pendulum axis (PA) and the axis of rotation (D; D') of the rotary mirror (4; 4') are coaxial.

**13.** Apparatus according to claim 12 characterised in that the pendulum axis (PA) and the axis of rotation (D; D') lie in a horizontal plane.

**14.** Apparatus according to one of claims 1 to 9 characterised in that the light receiver (1) is disposed on the axis of rotation (D) of the rotating reflecting surface (22).

**15.** Apparatus according to one of claims 1 to 8 and 10 to 12 characterised in that the light receiver (1') is oriented in its receiving direction parallel to the first side (S1) of the angle (a) to be measured.

**16.** Apparatus according to one of claims 1 to 15 characterized in that the light receiver (1; 1') is connected to an evaluation device (12-22) which determines the angle (a) to be measured from the spacings in respect of time of the received light beams.

**17.** Apparatus according to one of claims 1 to 16 characterized in that, for measuring wheel positions on vehicles, in particular motor vehicles, associated with each vehicle wheel disposed in line with the respective wheel axis (RA) are the first light source (3) which emits the first light beam along the line extending the wheel axis (RA) which forms the first side (S1) of the angle (a) to be measured in a vertical plane, and also the aperture device (4, 5; 4', 5').

**18.** Apparatus according to one of claims 1 to 17 characterised in that the first light source (3), the second light source (6; 7; 10; 10'), the aperture device (4, 5; 4', 5') and the light receiver (1; 1') form a structural unit (2) which can be mounted on a component, in particular a vehicle wheel.

**19.** Apparatus according to claim 17 or claim 18 characterised in that the pendulum axis (PA) and the wheel axis (RA) are disposed perpendicularly to each other.

**20.** Apparatus according to one of claims 17 to 19 characterised in that the camber angle (b) of the wheel is determined from the measured angle (a).

**Revendications**

**1.** Dispositif pour la mesure optique d'un angle, des positions par exemple que font entre eux, de composants, notamment des positions de roues sur des véhicules dans un plan vertical, à l'aide de faisceaux de lumière, et dans lequel

- il est prévu une première source de lumière (3) servant à émettre un premier faisceau de lumière, qui est dirigé le long d'un premier côté (S1) de l'angle à mesurer (a) en direction du sommet (S0) de l'angle (a);
- sur un pendule (11), qui peut être dévié sous l'action de la force de pesanteur en fonction de l'angle à mesurer (a), est disposée une seconde source de lumière (6;7;10; 10'), dont le ou les faisceaux de lumière sont dirigés le long d'un second côté (S2) de l'angle à mesurer (a), en direction du sommet (S0) de l'angle (a);
- au sommet (S0) de l'angle (a) est prévu un dispositif à diaphragme (4,5; 4',5'), qui balaye un angle complet (360°) au moins dans le plan de l'angle à mesurer (a), avec une étroite zone passante pour la lumière émise le long des deux côtés (S1,S2) de l'angle (a), et possède une surface réfléchissante tournante (22;22'), sur laquelle est situé le sommet (S0) de l'angle à mesurer et qui réfléchit les faisceaux de lumière respectifs, qui rencontrent les sources de lumière (3,6;7,10;10'), sur le récepteur de lumière (1;1') dans la position angulaire de la zone passante du dispositif à diaphragme (4,5;4',5');
- un récepteur de lumière (1;1') est disposé sur le trajet du faisceau de lumière traversant la zone passante du dispositif à diaphragme (4,5;4',5');
- au récepteur de lumière (1,1') est raccordé un dispositif (13,14) d'enregistrement de signaux, qui enregistre des signaux de sortie respectifs délivrés par le récepteur de lumière (1;1'), et
- au dispositif (13,14) d'enregistrement de signaux est raccordé un dispositif de calcul (17,18,19), qui, à partir de la distance d'enregistrement des signaux enregistrés dans le dispositif d'enregistrement de signaux, calcule l'écart angulaire entre les deux côtés (S1,S2).

**2.** Dispositif suivant la revendication 1, caractérisé par le fait que la zone passante du dispositif à diaphragme (4,5; 4',5') parcourt, avec une vitesse constante, l'angle total (360°) dans le plan de l'angle à mesurer (a).

**3.** Dispositif suivant la revendication 1 ou 2, caractérisé par le fait que l'écart entre enregistrements est une durée.

**4.** Dispositif suivant l'une des revendications 1 à 3, caractérisé par le fait que la source de lumière (6;6') située sur le pendule (11) est disposée d'une manière doublée dans un plan parallèle au plan de l'angle à mesurer (a) et de manière à former avec l'axe (PA) du pendule, un triangle isocèle.

**5.** Dispositif suivant l'une des revendications 1 à 4, caractérisé par le fait que la source de lumière (6;7) est formée par des émetteurs de lumière.

**6.** Dispositif suivant l'une des revendications 1 à 5, caractérisé par le fait que la seconde source de lumière (10;10') est constituée par un ou des réflecteurs pour les faisceaux de lumière émis par la première source de lumière (3) ou par d'autres sources de lumière (8).

**7.** Dispositif suivant l'une des revendications 1 à 6, caractérisé par le fait que la première source de lumière (3) est agencée sous la forme d'un émetteur de lumière et émet un faisceau de lumière, dont l'axe coïncide avec le premier côté (S1) de l'angle à mesurer (a).

**8.** Dispositif suivant la revendication 4, caractérisé par le fait que la source de lumière (6;10') disposée en double émet deux faisceaux de lumière, qui se rencontrent au sommet (S0) de l'angle à mesurer (a), les deux faisceaux de lumière étant situés de part et d'autre du second côté (S2) de l'angle à mesurer (a).

**9.** Dispositif suivant l'une des revendications 1 à 8, caractérisé par le fait que la surface réfléchissante tournante (22) fait un angle de 45° par rapport à son axe de rotation (D) et que l'axe de rotation (D) est perpendiculaire au plan dans lequel est situé l'angle à mesurer (a).

**10.** Dispositif suivant l'une des revendications 1 à 8, caractérisé par le fait que la surface réfléchissante tournante (22') est perpendiculaire au plan dans lequel est situé l'angle à mesurer (a), et que l'axe de rotation (D') est situé dans la surface réfléchissante (22').

**11.** Dispositif suivant l'une des revendications 1 à 10, caractérisé par le fait que la surface réfléchissante (22,22') est située sur un miroir rotatif (4;4').

**12.** Dispositif suivant la revendication 11, caractérisé par le fait que l'axe (PA) du pendule et l'axe de rotation (D;D') du miroir rotatif (4;4') sont coaxiaux.

**13.** Dispositif suivant la revendication 12, caractérisé par le fait que l'axe (PA) du pendule et l'axe de rotation (D;D') sont situés dans un plan horizontal.

**14.** Dispositif suivant l'une des revendications 1 à 9, caractérisé par le fait que le récepteur de lumière (1) est situé sur l'axe de rotation (D) de la surface réfléchissante tournante (22).

**15.** Dispositif suivant l'une des revendications 1 à 8 et 10 à 12, caractérisé par le fait que la direction de réception du récepteur de lumière (1') est parallèle au premier côté (S1) de l'angle à mesurer (a).

**16.** Dispositif suivant l'une des revendications à 15, caractérisé par le fait que le récepteur de lumière (1; 1') est raccordé à un dispositif d'évaluation (12-22), qui, à partir des durées des faisceaux de lumière reçus, détermine l'angle à mesurer (a).

**17.** Dispositif suivant l'une des revendications 1 à 16, caractérisé par le fait que pour la mesure de positions de roues sur des véhicules, notamment des véhicules automobiles, pour chaque roue du véhicule, la première source de lumière (3), qui émet le premier faisceau de lumière le long du prolongement de l'axe de roue (RA), qui constitue le premier côté (S1) de l'angle (a) à mesurer dans un plan vertical, et en outre le dispositif à diaphragme (4,5; 4',5') sont situés dans le prolongement de l'axe de roue respectif (RA).

**18.** Dispositif suivant l'une des revendications 1 à 17, caractérisé par le fait que la première source de lumière (3), la seconde source de lumière (6;7;10;10'), le dispositif à diaphragme (4,5;4',5') et le récepteur de lumière (1;1') forment une unité de construction (2) pouvant être montée sur un composant, notamment une roue du véhicule.

**19.** Dispositif suivant la revendication 17 ou 18, caractérisé par le fait que l'axe (PA) du pendule et l'axe de roue (RA) sont perpendiculaires l'un à l'autre.

**20.** Dispositif suivant l'une des revendications 17 à 19, caractérisé par le fait que l'angle de carrossage (b) de la roue est déterminé à partir de l'angle mesuré (a).

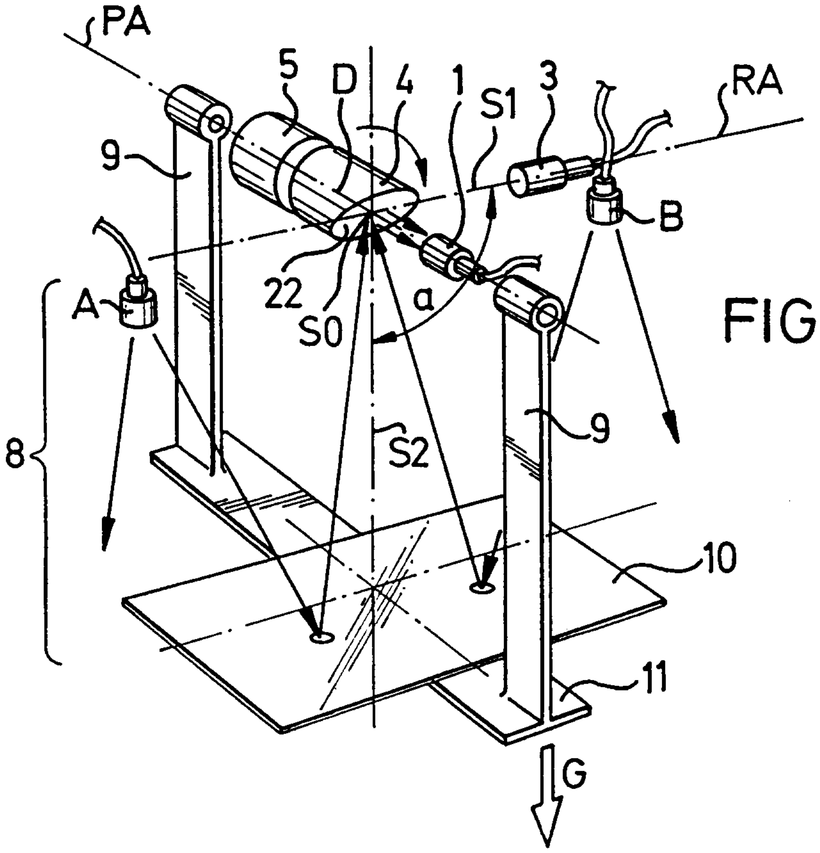
PA
5
D
4
1
S1
3
RA
9
B
22
A
S0
a
8
S2
9
10
11
G

FIG. 1

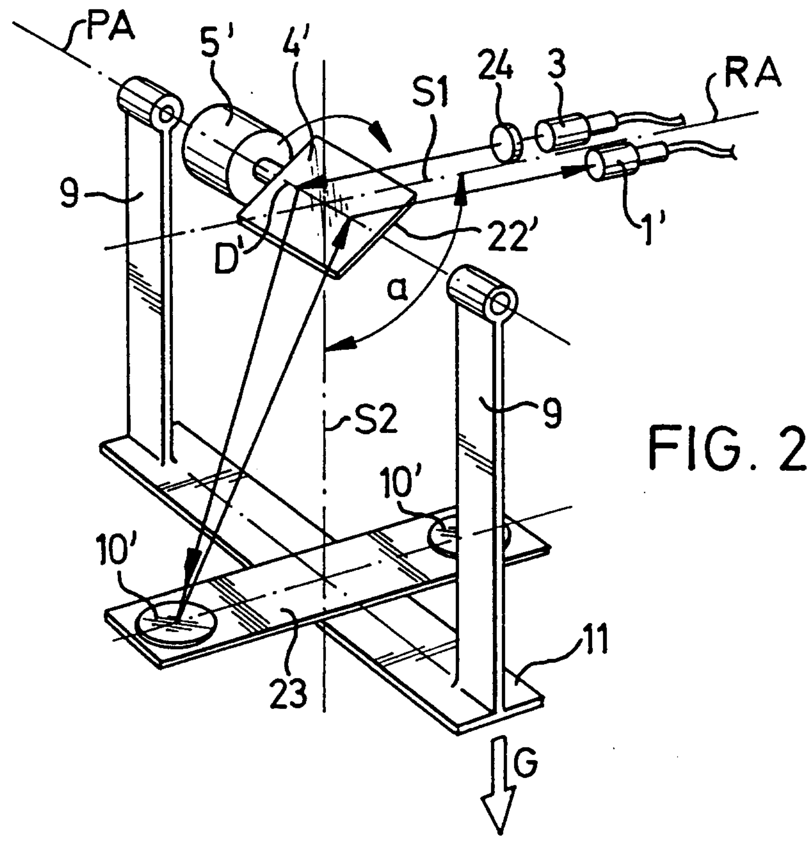
PA
5'
4'
S1
24
3
RA
9
22'
1'
D'
a
S2
9
10'
10'
23
11
G

FIG. 2

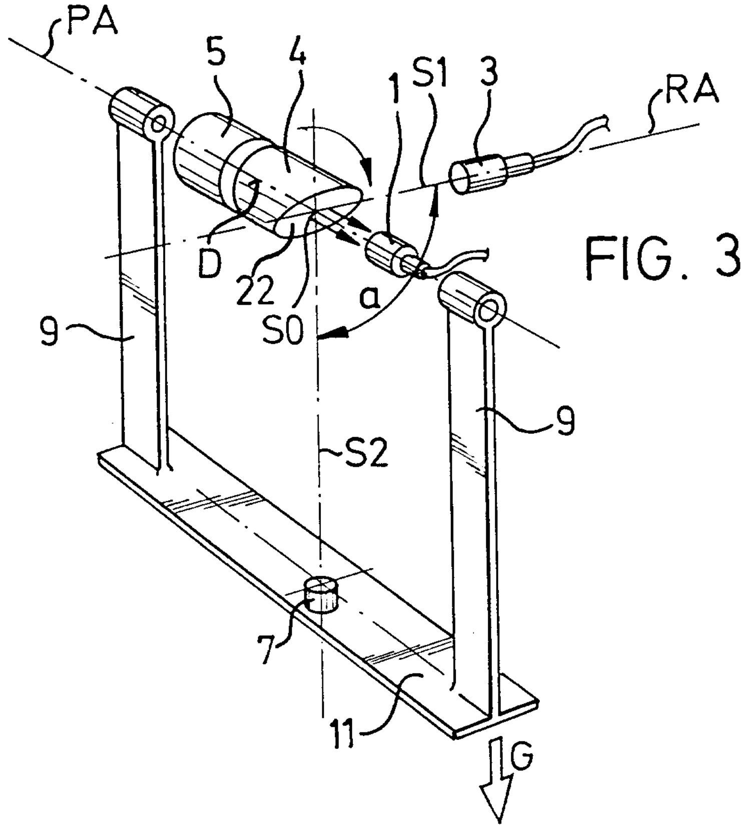

PA
5
4
1
S1
3
RA
D
22
S0
a
9
9
S2
7
11
G


FIG. 3

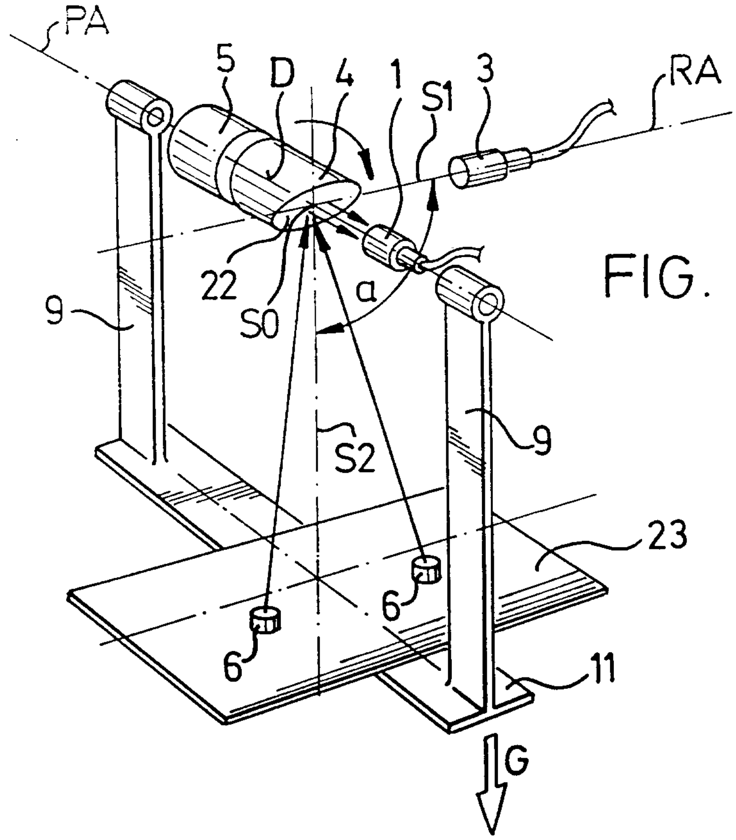

PA
5
D
4
1
S1
3
RA
22
S0
a
9
9
S2
23
6
6
11
G


FIG. 4

FIG. 5

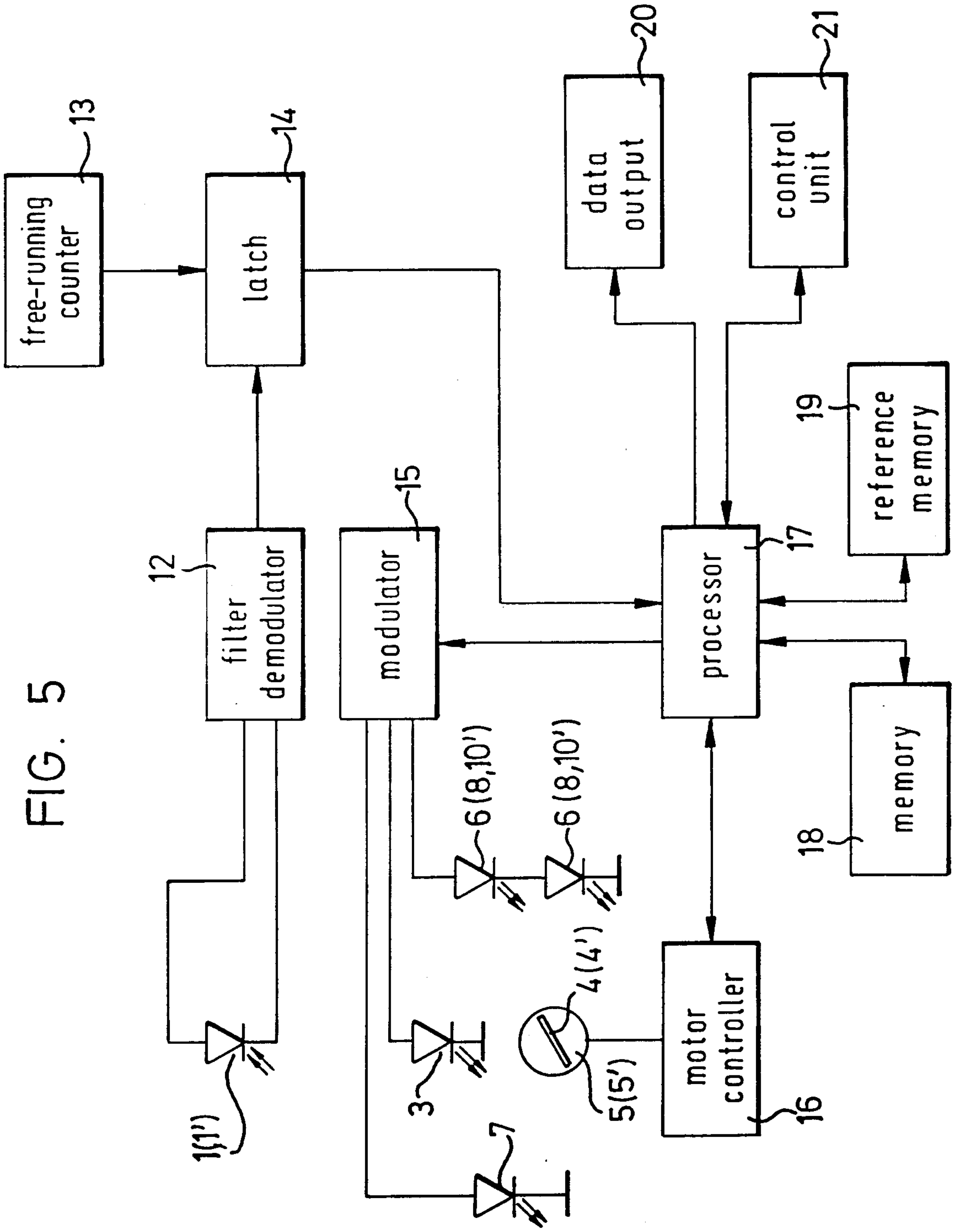
free-running counter
13
latch
14
data output
20
control unit
21
filter demodulator
12
modulator
15
processor
17
reference memory
19
memory
18
motor controller
16
1(1')
3
7
6(8,10')
6(8,10')
4(4')
5(5')

FIG. 6

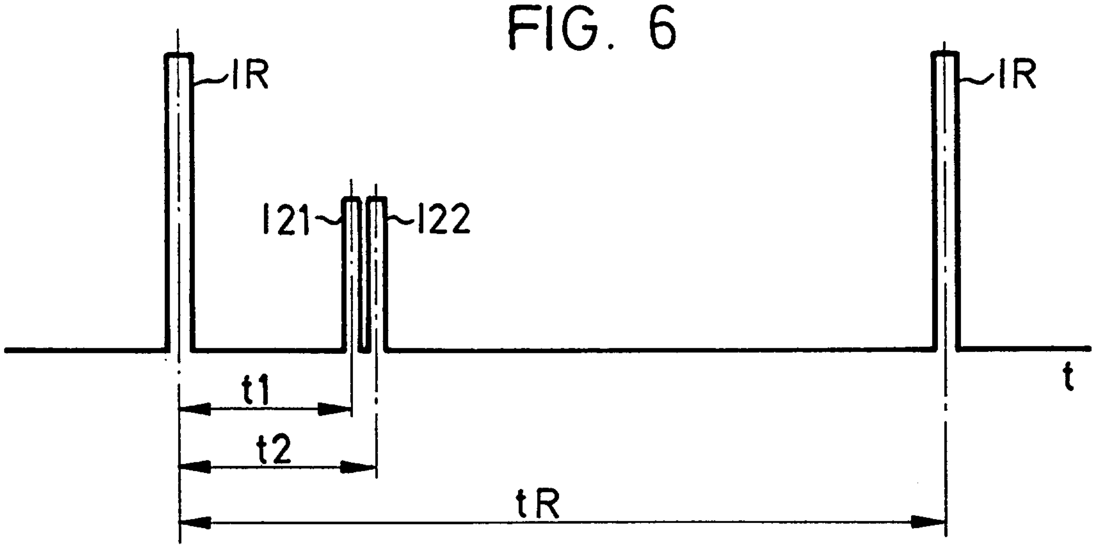


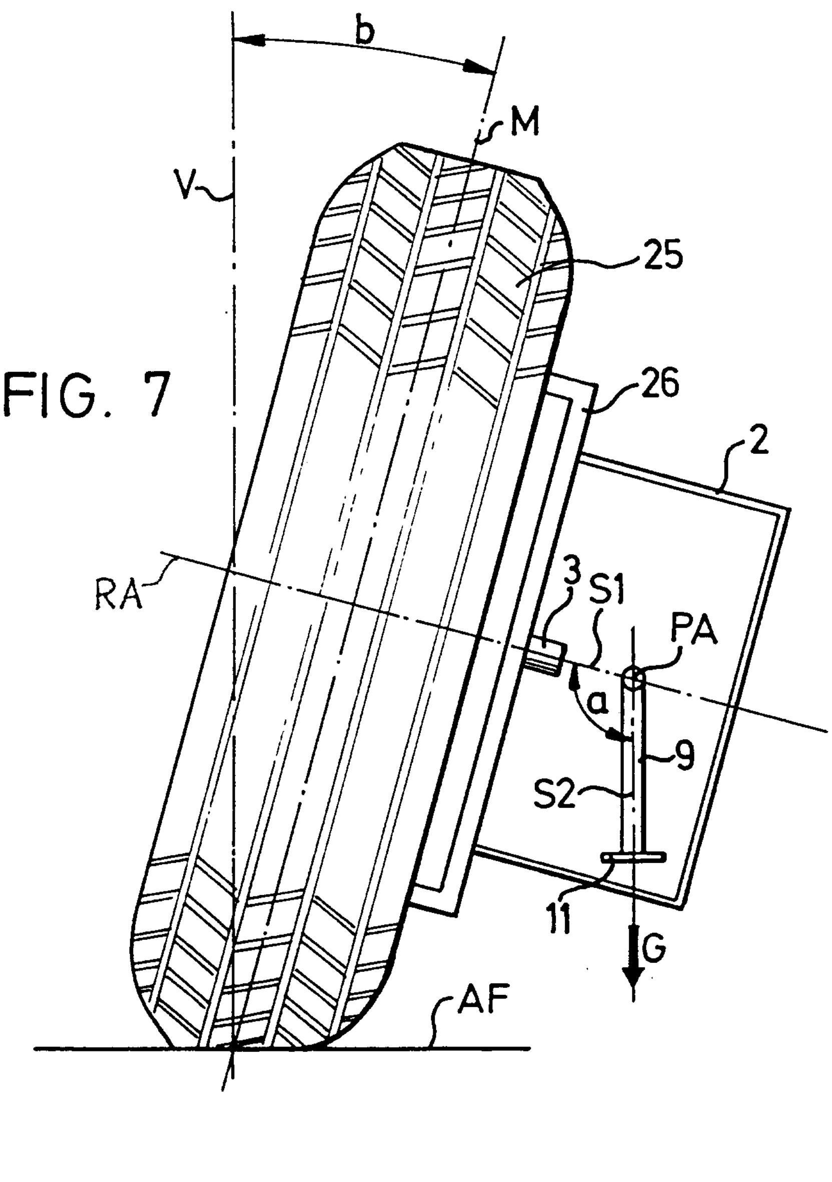


FIG. 7